# EUROPEAN PATENT APPLICATION

(11) **EP 2 243 692 A2**
(43) Date of publication of application: **27.10.2010**
(21) Application number: 10159549.4
(22) Date of filing: 09.04.2010
(51) Int. Cl.: B62K 9/00, A63C 17/12, B62M 1/10

(54) **Recreational vehicle**

(30) Priority: 22.04.2009 GB 0906909; 01.02.2010 GB 1001600
(71) Applicant: Tube Plastics Limited, Stourport-on-Severn Worcestershire DY13 9EX (GB)
(72) Inventor: Webb, Ian, London, W2 1PN (GB); Mann, Miles Gilbert, Stourport-on-Severn, Worcestershire DY13 9EX (GB); Redfern, Ian, Stourport-on-Severn, Worcestershire DY13 9EX (GB)
(74) Representative: Matthews, Paul

(57) **Abstract**

This invention concerns a recreational vehicle comprising a body (102) having a front wheel (114) and a rear wheel (103) mounted thereto by a mounting system that allows relative movement between an axis of the rear wheel and an axis of the front wheels. Biasing means (191) is provided for urging the axes of the front and rear wheels towards each other. A locking system (180) locks at least one of the front and rear wheels (103, 114) against rotation in one direction whilst allowing rotation of that wheel in the other direction. The invention also concerns a recreational vehicle (1) comprising a body (2) having at least one bouncing element (3) mounted thereto, the bouncing element (3) having sufficient resilience to allow a user to bounce the recreational vehicle and wherein the bouncing element is mounted to the body (2) by a mounting system (4), which defines an axis of rotation for the bouncing element (3).

## Description

This invention relates to a recreational vehicle. In particular, it relates to a recreational vehicle adapted for translational movement by rolling and bouncing movement.

There are many recreational vehicles suitable for use by children including, amongst others, bicycles, tricycles, quadricycles and scooters. These vehicles are wheeled and are therefore designed to move by way of the wheels rotating about an axis along the ground allowing the vehicle to roll along. Other recreational vehicles include hopping balls, pogo sticks or pogo balls. These devices operate by way of a resilient elastic element, such as a spring, that the user compresses with their body weight or through a jumping action to store energy. When the user lifts their weight or when the elastic element has stored sufficient energy, it resiles causing the device and user to jump or "bounce".

Further, recreational apparatus is known that comprises a frame or body upon which a user stands or sits and to which a resilient elastic element is attached. Such a device is shown in US 5 009 415 (Blanco). This document discloses recreational gymnastics apparatus comprising a support platform with handlebars, the support platform including a housing to receive a resilient ball. The housing includes a hole with a diameter slightly smaller than the resilient ball and therefore retains it. The platform also includes small arms at the front of the platform which may include small wheels.

According to an aspect of the invention there is provided a recreational vehicle comprising a body having a front wheel and a rear wheel mounted thereto by a mounting system that allows relative movement between an axis of the rear wheel and an axis of the front wheels, biasing means for urging the axes of the front and rear wheels towards each other and a locking system for locking at least one of the front and rear wheels against rotation in one direction whilst allowing rotation of that wheel in the other direction.

In this way, forward motion of the vehicle can be achieved by continually applying and releasing a downwards force, eg bouncing, on the body of the vehicle. More specifically, application of a downwards force on the body pushes the axes of the front and rear wheels apart whilst releasing this force allows the biasing means to urge the axes back together. As rotation of the one of the wheels is locked against rotation in one direction, the wheel will lock when the wheels are either pushed apart or drawn together but not vice-versa causing a resultant movement of the vehicle in one direction. Such a method of propelling a vehicle may increase the amusement of a recreational vehicle for a user, particularly for a young child, who is unable to operate systems, such as pedals, that require more complex movements of the user.

In a preferred embodiment, the locking system is arranged to lock both the front and rear wheels against rotation in the same (preferably rearward) direction. In this way, when the wheels are moved apart, the rear wheal locks against rearward movement and the front wheel moves forward, whereas when the wheels are biased back together the front wheel locks against rearward movement and the rear wheel moves forward. This results in forward motion of the vehicle both when a downward force is applied to the body and on release of that downward force.

In one embodiment, a mechanism of the locking system for the or each wheel is a ratchet mechanism. The ratchet mechanism may comprise a toothed recess in the wheel and pawl fixed relative to an axle of the wheel. This may be preferable to a contrary arrangement of a gear attached to the axle and a pawl attached to the wheel as the toothed recess could be moulded integral with the wheel. In one embodiment, the pawl comprises two or more tongues for engagement with teeth of the toothed recess.

The mounting system may be arranged comprise at least one arm for carrying the rear or front wheel, preferably the rear wheel, the arm mounted to the body for pivotal movement. In this way, a downwards force applied to the body causes the arm to pivot relative to the body pushing the wheels apart. The other of the front and rear may be mounted such that the axis of that wheel is fixed relative to the body.

The biasing means may comprise a biasing member, such as a spring, attached to the arm and the body of the vehicle. The body may be arranged such that the biasing member is housed entirely within the body. This may have the advantage of protecting a user, such as a child, from trapping a finger, or the like, in the biasing means.

The wheels may comprise an anti-slip outer surface, for example the wheels may comprise a hard inner shell and a soft plastic outer coating, for example provided by an over-moulding of the hard inner shell. In this way, the hard inner shell provides durability whilst the soft outer coating prevents the wheel from slipping on the floor. The outer surface of the wheels may be of non-marking material.

According to another aspect of the invention we provide a recreational vehicle comprising a body having at least one bouncing element mounted thereto, the bouncing element having sufficient resilience to allow a user to bounce the recreational vehicle and wherein the bouncing element is mounted to the body by a mounting system, which defines an axis of rotation for the bouncing element.

This is advantageous as not only does the recreational vehicle include the characteristics of a bouncing recreational vehicle it is able to roll similar to a wheeled recreational vehicle using the bouncing element mounted to the body by the mounting system.

The bouncing element may comprise a substantially spherical inflatable ball. This is advantageous as it is simple to manufacture, the resilience can be controlled by the inflation pressure and it can roll about an axis.

The bouncing element may comprise a hollow, inflatable member having an outer surface wherein the bouncing element has at least one aperture therein to receive the mounting system, the at least one aperture having a wall that is continuous with the outer surface of the bouncing element. This is advantageous as the inflatable ball is a sealed unit which makes the bouncing element more robust as well as being easy to mount to the body.

The recreational vehicle may comprise one bouncing element and one or more wheels. This is advantageous for younger children as the recreational vehicle is stable because only one point of contact with the ground is flexible i.e. the bouncing element. The recreational vehicle may comprise two bouncing elements mounted at spaced locations to the body. This arrangement is advantageous as the recreational vehicle is easy to bounce by a user as well as roll along.

The bouncing element may include two diametrically opposed mounting sockets arranged to receive mounting lugs that are attached to the body of the vehicle. This is advantageous as the sockets provide a simple and easy to manufacture way of mounting the bouncing element in a rotatable configuration.

Alternatively, the mounting system may comprise an axle that passes through the bouncing element and defines the axis of rotation, the bouncing element comprising a substantially spherical ball having a walled bore therethrough to receive the mounting system. The axle may comprise an axle member that is adapted to extend through the bore in the ball and is secured therein by an end cap that is adapted to be secured to one end.

There now follows by way of example only a detailed description of the present invention with reference to the accompanying drawings in which;
**Figure 1** shows a first embodiment of the recreational vehicle of the invention;
**Figure 2** shows a cross-section through the bouncing element and part of a first embodiment of a mounting system;
**Figure 3** shows an exploded view of the first embodiment of the mounting system shown in Figure 2;
**Figure 4** shows a second embodiment of a mounting system;
**Figure 5** shows an exploded view of the second embodiment of the mounting system shown in Figure 4;
**Figure 6** shows a third embodiment of a mounting system;
**Figure 7** shows a side view of a second embodiment of the recreational vehicle;
**Figure 8** shows a front view of the recreational vehicle shown in **Figure 7****;**
**Figure 9** shows a third embodiment of a recreational vehicle according to the invention in a first position;
**Figure 10** shows the third embodiment of the recreational vehicle in a second position;
**Figure 11** shows an internal layout of the recreational vehicle according to the third embodiment; and
**Figure 12** shows a locking system of the third embodiment of the invention.

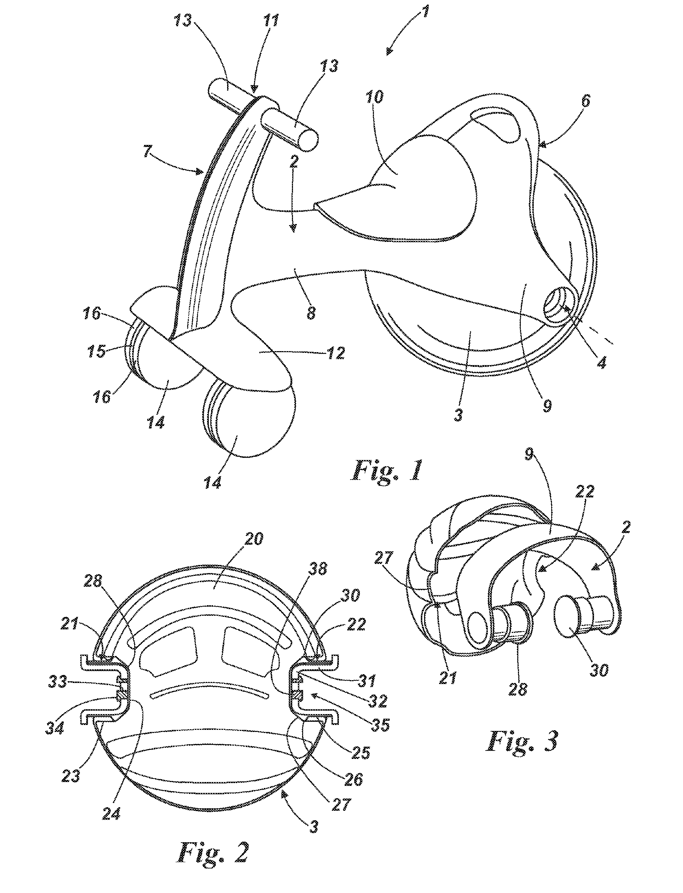

Figure 1 shows a first embodiment of a recreational vehicle 1. The recreational vehicle 1 is a child's toy. The vehicle 1 comprises a body 2 and a resilient bouncing element 3 mounted to the body 2 by a mounting system 4 (only one side visible). The mounting system 4 rotatably engages with the resilient bouncing element 3 at diametrically opposed points to define an axis of rotation 5 for the bouncing element 3, such that it is able to rotate about the axis.

The mounting system 4 is connected to mounting arms 9 of a rear portion 6 of the body 2. The mounting arms 9 are arranged to extend around the bouncing element 3 to secure it to the body at diametrically opposed points. The body 2 includes a front portion, shown generally as 7, connected to the rear portion 6 of the body 2 by an elongate cross member 8. The rear portion 6 also includes a seat 10 where the child can sit. The front portion 7 comprises handlebars 11 and a front wheel mounting portion 12. The handlebars 11 comprise a pair of hand pegs 13 arranged to be held by a child when the recreational vehicle is in use.

The front wheel mounting portion 12 comprises an elongate member extending perpendicular to the cross member 8. In this embodiment, the vehicle 1 includes two wheels 14. The wheels 14 are received at opposed ends of the wheel mounting portion 12. Each wheel 14 comprises a central support element 15 that connects to the front wheel mounting portion 12 and a pair of wheel halves 16 that engage the ground. The central support element 15 includes an axle member (not visible) that rotatably connects the wheel halves 16 to the central support element 15.

The elastic bouncing element 3 comprises an inflatable ball of resilient material. The resilience of the material is chosen to allow a child or desired user of the recreational vehicle 1 to bounce the vehicle. Thus, the bouncing element 3 is constructed and arranged to be deformed by the weight of the child or, in particular, when the child jumps down upon the vehicle 1. In the case of an inflatable ball, this may be achieved in part by determining the appropriate inflation pressure. The elastic nature of the bouncing element 3 will cause it to resile against the force of the user, particularly when the user lifts their weight, such that the recreational vehicle 1 will rebound from the ground allowing the user to bounce with the vehicle. However, the inflatable ball is of a resilience and inflated pressure that allows it to rotate about the mounting system 4.

The mounting system 4 is shown in more detail in Figures 2 and 3. Figure 2 shows a cross-section through the bouncing element 3. The bouncing element 3 comprises an inflatable hollow ball having indentations 20 moulded into its surface to form a tread pattern. The ball 3 has apertures in the form of a first socket 21 and second socket 22 diametrically opposed to one another. The first and second sockets 21, 22 are of the form of a blind bore of circular cross-section having a cylindrical wall 23 and a base 24. Thus, the surface of the ball 3 is continuous. The cylindrical wall 23 includes a first diameter portion 25 and a second diameter portion 26, adjacent the base 25 of the socket 21, 22. The second diameter portion 26 is of a greater diameter than the first diameter portion 25 and defines an annular recess 27 in the sockets 21, 22.

The first and second sockets 21, 22 are adapted to receive an interface bush 28 which comprises a cup-shaped member complementary to the socket. The interface bush 28 comprises a cylindrical wall 31 and a base 32, which define a cavity 35. The cylindrical wall 31 has an annular securing ridge 30, complimentary to the recess 27, on its outside surface. The interface bush 28 also includes an axle peg 33 which extends from the base 32 into the cavity 35. The axle peg 33 has a plurality of catch members 34 (in this embodiment, three catch members) extending from its distal end. The interface bushes 28 form an interference fit with the cylindrical walls 23 of the first and second sockets 21 and 22 and the securing ridges 30 engages with the recess 27 to resist removal.

The mounting system 4 further comprises a first engagement lug 36 and a second engagement lug 37 on the mounting arms 9 of the body 2 (only part of which is shown in Figure 3). The lugs 36, 37 face one another and are complimentary to the interface bushes 28. The lugs 36 and 37 each have an axle aperture 38 constructed and arranged to receive the axle peg 33. The first engagement lug 36 is received within the interface bush 28 of the first socket 21. The second engagement lug 37 is received within the interface bush 28 of the second socket 22. The axle pegs 33 project through the axle apertures 38 and the catch members 34 "snap" into engagement with the periphery of the axle apertures 38 to secure the ball 3 to the body 2. Thus, the axle pegs 33 rotate within the axle apertures when the ball 3 rotates. The interface bushes are advantageous as they provide the means for the rotatable connection between the bouncing element and the body, thus preventing excessive wear to the bouncing element.

The catch members 34 ensure that the bouncing element 3 remains securely attached to the body 2 even if it were to deflate. This is advantageous as it makes the vehicle safe to use. Further, the mounting system 4 of this embodiment has been found particularly advantageous in allowing the vehicle to both bounce and roll.

In use, a child would typically sit on the seat 10 and place their hands on the hang pegs 13. The bouncing element ball 3 and, in particular, how it is mounted to the body 2, allow the child to bounce the vehicle as well as roll it along the ground.

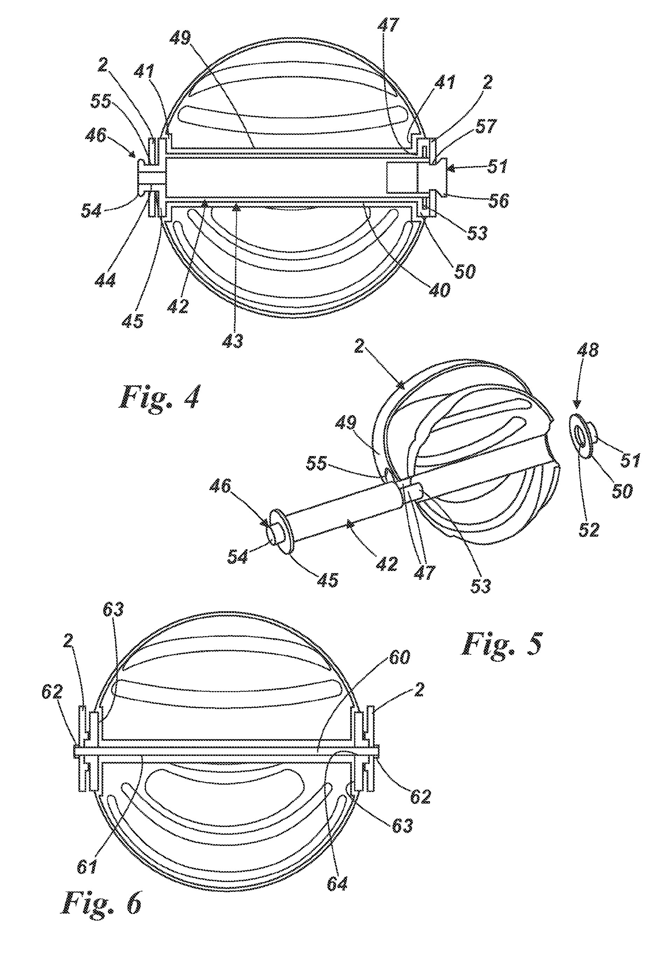

A second embodiment of the mounting system 4 is shown in Figures 4 and 5. In this embodiment the bouncing element ball 3 is modified to include a bore 40 that passes through the centre of the ball 3. The bore has walls 49 continuous with the surface of the ball 3. The bore 40 includes two wider diameter portions 41 at each end. The mounting system 4 comprises an axle member 42 of tubular form. The axle member 42 comprises a first diameter portion 43 and a smaller second diameter portion 44, at a first end, separated by an annular flange 45. The smaller diameter portion forms a first axle peg 46. At the other end of the axle member 42, and projecting axially from the first diameter portion 43, are a pair of engagement fingers 47. The fingers 47 are arranged to engage an end cap 48. The end cap 48 comprises a second axle peg 51 and an annular flange 50 and extending radially from one end. The annular flange 50 includes an aperture 52 arranged to receive the engagement fingers 47. The engagement fingers 47 each include a radially extending detent 53 at their distal ends. The engagement fingers 47 are arranged to extend through the aperture 52 such that the detents 53 "snap" into engagement with the flange 50.

The first axle peg 46 includes a retaining ridge 54, at an end of the axle peg 46 opposed to the annular flange 45. The second axle peg 51 also includes a retaining ridge 56, at an end of the axle peg 51 opposed to the annular flange 50. In this embodiment, the mounting system 4 includes a pair of axle apertures 55 and 57 on the mounting arms 9 of the body 2 (only part of which is shown in Figure 5). Thus, the tubular axle member 42 is mounted within the bore 40 and secured therein by the engagement fingers 47 engaging with the end cap 48 as discussed above. The annular flange 45 is received within one of the wider diameter portions 41 and annular flange 50 is received within the other wider diameter portion 41, such that the flanges 45 and 50 are flush with the surface of the ball 3. The axle aperture 55 receives the first axle peg 46, which is arranged to rotate within the aperture 55 and is retained therein by the flange 45 and retaining ridge 54. Similarly, the axle aperture 57 receives the second axle peg 51, which is arranged to rotate within the aperture 57 and is retained therein by the flange 50 and retaining ridge 56. Thus, the connection between the tubular axle member 42 and the bouncing element is stationary, as the axle pegs and axle apertures provide the means for the rotatable connection. This prevents excessive wear to the bouncing element.

A third embodiment of the mounting system 4 is shown in Figure 6. In this embodiment, the mounting system 4 comprises an axle rod 60. Accordingly, the bouncing element ball 3 has a narrow bore 61 therethrough, complimentary to the diameter of the axle rod 60. The bore 61 has a wall 49 continuous with the surface of the ball 3. The bore 61 includes a wider diameter portion 63 at each end. The axle rod 60 is threaded at its ends and each end is adapted to receive a securing nut 62. The axle rod 60 is mounted in the bore 61. An abutment plate 64 is adapted to be mounted in each of the wider diameter portions 63. The abutment plate 64 has an aperture 65 axially through its centre to receive the axle rod 60 therethrough. The arms 49 of the body 2 includes a first axle aperture 55 arranged to receive one end of the axle rod 60 and a second axle aperture 57 arranged to receive the other end of the axle rod 60. The securing nuts 62 are screwed onto the rod 60 to hold the body 2 between the securing nuts 62 and the abutment plates 64. The axle rod 60, abutment plates 64 and securing nuts 62 rotate with the ball 3 in the first and second axle apertures 55, 57. This arrangement prevents excessive wear to the bouncing element.

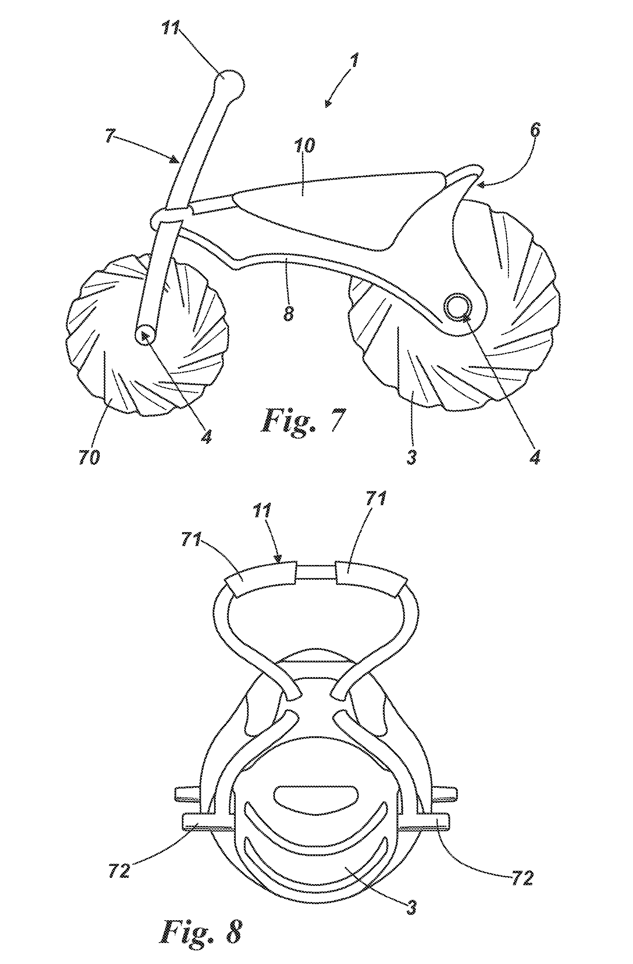

Figures 7 and 8 show a second embodiment of a recreational vehicle 1. The same reference numerals have been used for corresponding parts. The recreational vehicle 1 of this embodiment is for older children than that of the first embodiment. In this embodiment, the front wheel mounting portion 12 has been replaced by a second bouncing element 70. The second bouncing element 70 may utilise the same mounting system 4 as employed to attach the first bouncing element 3, although it may be different. The handlebars 11 of this embodiment are in the form of a single bar having a pair of grips 71. Further, the rear portion 6 includes two foot pegs 72, one extending from each side of the body 2 adjacent to the first bouncing element 3. Similarly, the front portion 7 includes two foot pegs 72, one extending from each side of the body 2 adjacent to the second bouncing element 3. The foot pegs 72 are arranged to support the user's feet when the device is in use.

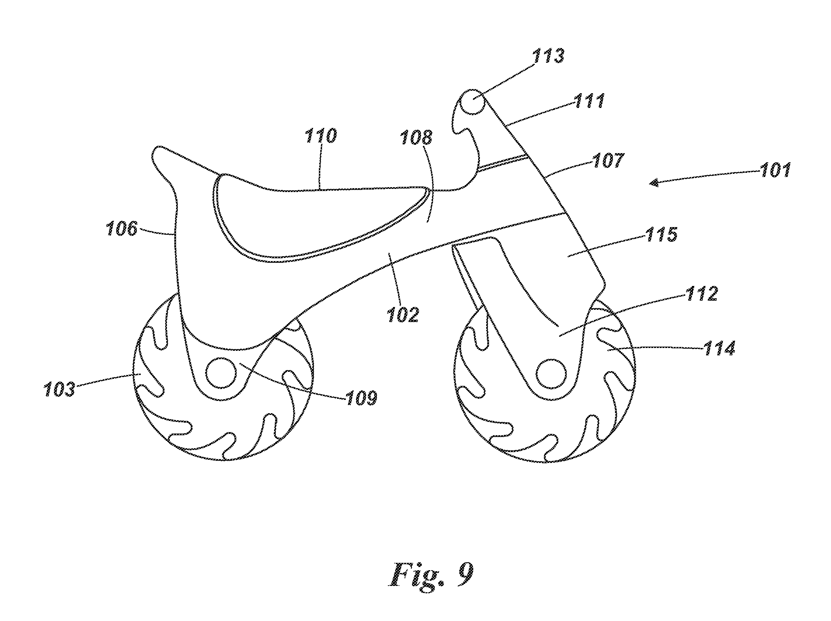

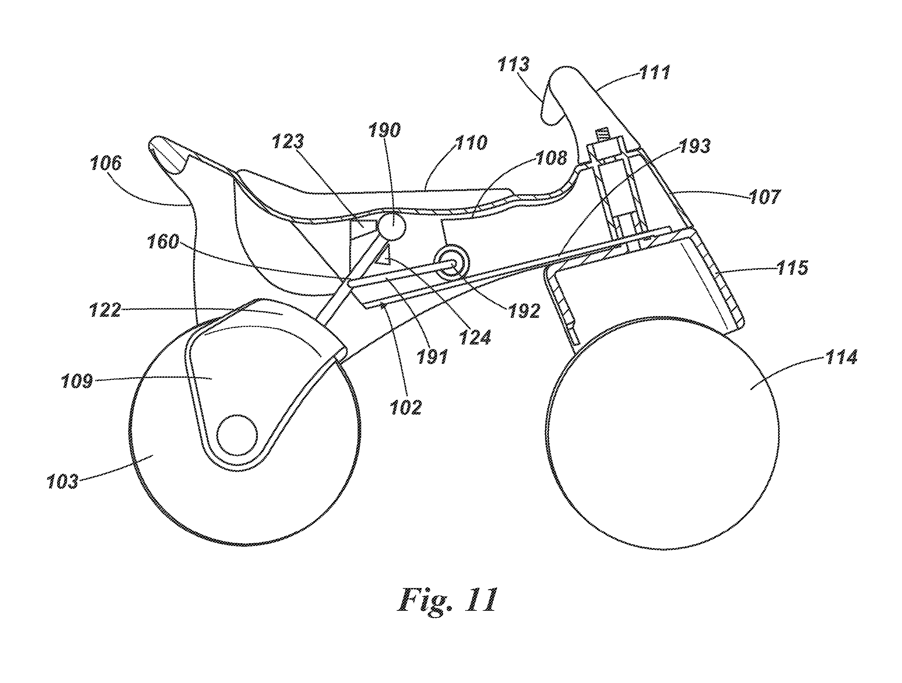

Referring to Figures 9 to 12, a recreational vehicle 101, in this embodiment a child's toy, comprises a body 102 having a front wheel 114 and a rear wheel 103 mounted thereto by a mounting system. The mounting system is arranged to allow relative movement between an axis of the rear wheel 103 and an axis of the front wheels 114. Biasing means, in this embodiment an elasticated cord 191, is provided for urging the axes of the front and rear wheels 103, 114 towards each other. A locking system 180 is provided for locking the front and rear wheels 114, 103 against rotation in one direction (to prevent motion of the vehicle rearwards) whilst allowing rotation of the wheels 103, 114 in the other direction (to allow motion of the vehicle forwards).

The body 102 is generally triangular in cross-section having a narrow front portion, shown generally at 107, connected to a wider rear portion 106. A seat 110 where a child can sit extends across an upper part of the rear and central portions 106, 108 of the body 102. The front portion 107 comprises handlebars 111 having a pair of hand pegs 113 to be held by a child when the recreational vehicle is in use.

The mounting system comprises rear mounting arms 109 and front mounting arms 112 for carrying the rear or front wheel 103, 114 respectively. Each wheel 103, 114 is connected to the corresponding arms 109, 112 by an axle (not shown) that passes through a bore in the wheel 103, 114 to be received in axle apertures 155 in the arms 109, 112. Forming the aperture 155 on one of the arms 109, 112 is a projection 156 having a non-circular cross-section, in this embodiment a hexagonal cross-section, to be inserted in a correspondingly shaped aperture of a pawl 183 of the locking system 180, as described in more detail below. A circlip 157 clips around the axle to permit rotation of the axle but prevent lateral movement. A cap 158 fits within a recess 159 in each arm 109, 112 to protect against the user from contacting the rotating axle, in use.

The arms 109 that carry the rear wheel 103 are integrally connected together to extend around the wheel 103. An elongate member 160 extends upwardly from a shoulder portion 122 of the arms 109 (that extends over a circumference of the wheel 103) to be pivotally connected to the body 102 for rotation about a point 190. Pivotal movement of the arms 109 relative to the body 102 is limited by abutments 123, 124.

The arms 112 carrying the front wheel 114 are part of a front fork 115 fixed to the body 102.

The elasticated cord 191 is attached between the elongate member 160 and an attachment point 192 on the body 102 of the vehicle. The body 102 may be arranged such that the elasticated cord 191 is housed entirely within the body 102. In this embodiment, a guard plate 193 closes an opening in the bottom of the body 102 to block access to the elasticated cord 191. This may have the advantage of protecting a user, such as a child, from trapping a finger, or the like, between the elasticated cord 191 and the body 102 or front fork 115 of the vehicle.

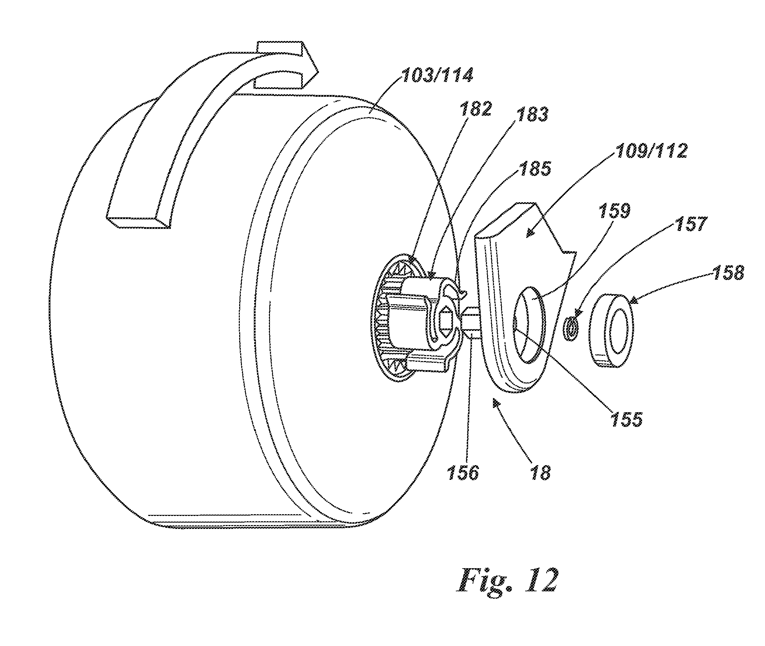

The locking system 180 comprises a locking mechanism 181 for each wheel 103, 114, in this embodiment a ratchet mechanism 181. The ratchet mechanism 181 comprises a toothed recess 182 integrally moulded in the wheel 103, 114 and the pawl 183 fixed relative to an axis of rotation of the wheel 103, 114 (ie does not rotate about the axis of the wheel). In this embodiment, this is achieved through attachment of the pawl 183 to the hexagonal projection 156 of one of the arms 103. The pawl 184 comprises three tongues 185 arranged to engage with the teeth of the toothed recess 182. The tongues 185 are shaped such that initial rotation of the wheel 102, 114 in one direction causes the tongues 185 to engage with the teeth and resist further rotation, whereas on rotation of the wheel 103, 114 in the other direction, the tongues 185 resiliently flex to pass over the teeth and allow continued rotation. In this embodiment, the tongues 185 are spiral shaped with outwardly hooked ends for engagement with the teeth. The arrow in Figure 12 indicates the direction in which the wheel is allowed to rotate.

The wheels 103, 114 comprise an anti-slip, non-marking outer surface formed from moulding a soft plastic coating over a harder inner shell. The hard inner shell may provide durability whilst the soft outer coating prevents the wheel from slipping and marking the floor.

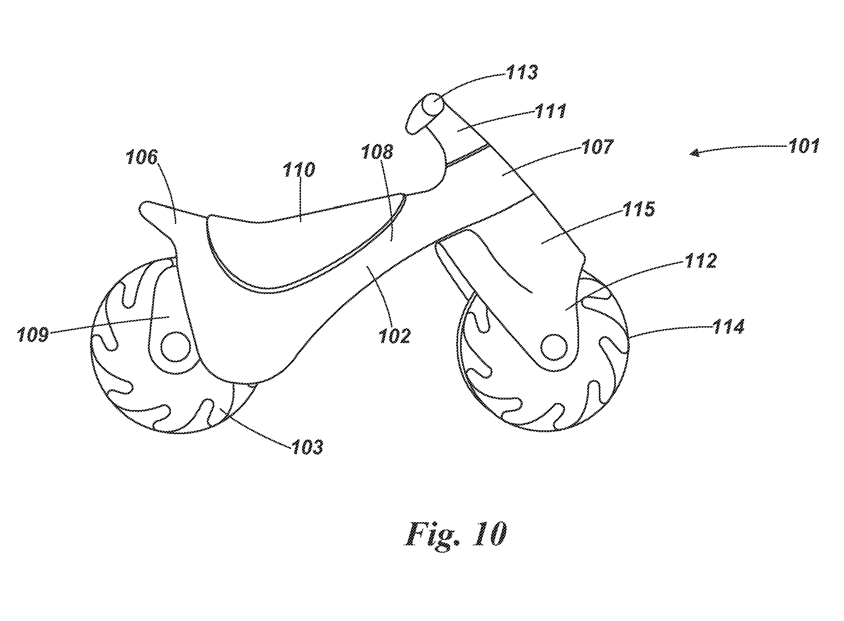

In use, a user bounces on the seat 110, the vehicle translating this up and down motion into forward motion of the vehicle 101. More specifically, application of a downwards force on the body 102 causes the arms 109 to pivot such that the front and rear wheels 103, 114 move apart (resulting in a position as shown in Figure 10). Releasing of the downwards force allows the elasticated cord 191 to pivot the arms 109 in the other direction urging the wheels 103, 114 back together (resulting in a position as shown in Figure 9). As rotation of the wheels 103, 114 is locked against rearward rotation, only the front wheel 114 will roll when the wheels 103, 114 are pushed apart whereas only the back wheel will roll when the wheels 103, 114 are urged together. In this way, bouncing on the body 2 causes forward movement of the vehicle 101. Such a method of propelling a vehicle may increase the amusement of a recreational vehicle for a user, particularly for a young child, who is unable to operate systems, such as pedals, that require better balance and more complex movements of the user.

Alterations and modifications can be made to the above described embodiments without departing from the invention as defined herein. For example, the number of front and rear wheels may be changed. For example, two front and/or two rear wheels could be provided.

## Claims

1. A recreational vehicle comprising a body having a front wheel and a rear wheel mounted thereto by a mounting system that allows relative movement between an axis of the rear wheel and an axis of the front wheel, biasing means for urging the axes of the front and rear wheels towards each other and a locking system for locking at least one of the front and rear wheels against rotation in one direction whilst allowing rotation of that wheel in the other direction.

2. A recreational vehicle according to claim 1, wherein the locking system is arranged to lock both the front and rear wheels against rotation in the same direction.

3. A recreational vehicle according to claim 1 or claim 2, wherein a mechanism of the locking system for the or each wheel is a ratchet mechanism.

4. A recreational vehicle according to claim 3, wherein the ratchet mechanism comprises a toothed recess in the wheel and pawl fixed relative to an axis of the wheel.

5. A recreational vehicle according to claim 4, wherein the mounting system comprises at least one arm for carrying the rear or front wheel, the arm mounted to the body for pivotal movement.

6. A recreational vehicle according to claim 5, wherein the biasing means comprises a biasing member attached to the arm and the body of the vehicle.

7. A recreational vehicle according to claim 6, wherein the body is arranged such that the biasing means is housed entirely within the body.

8. A recreational vehicle according to any one of the preceding claims, wherein the wheels comprise an anti-slip outer surface.

9. A recreational vehicle comprising a body having at least one bouncing element mounted thereto, the bouncing element having sufficient resilience to allow a user to bounce the recreational vehicle and wherein the bouncing element is mounted to the body by a mounting system, which defines an axis of rotation for the bouncing element.

10. A recreational vehicle according to claim 9, in which the bouncing element comprises a substantially spherical inflatable ball.

11. A recreational vehicle according to claim 9 or claim 10, in which the bouncing element comprises a hollow, inflatable member having an outer surface wherein the bouncing element has at least one aperture therein to receive the mounting system, the at least one aperture having a wall that is continuous with the outer surface of the bouncing element.

12. A recreational vehicle according to any one of claims 9 to 11, in which the recreational vehicle comprises one bouncing element and one or more wheels.

13. A recreational vehicle according to any of claims 9 to 11, in which the recreational vehicle comprises two bouncing elements mounted at spaced locations to the body.

14. A recreational vehicle according to any one of claims 9 to 13, in which the bouncing element includes two diametrically opposed mounting sockets arranged to receive mounting lugs that are attached to the body of the vehicle.

15. A recreational vehicle according to any of claims 9 to 13, in which the mounting system comprises an axle that passes through the bouncing element and defines the axis of rotation, the bouncing element comprising a substantially spherical ball having a walled bore therethrough to receive the mounting system, and optionally
in which the axle comprises an axle member that is adapted to extend through the bore in the ball and is secured therein by an end cap that is adapted to be secured to one end.
